# EUROPÄISCHE PATENTANMELDUNG

(11) **EP 4 691 888 A1**
(43) Veröffentlichungstag der Anmeldung: **11.02.2026**
(21) Anmeldenummer: 24193295.3
(22) Anmeldetag: 07.08.2024
(51) Int. Cl.: B62D 33/04

(54) **PANEEL UND KOFFERAUFBAU MIT EINEM PANEEL**

(71) Anmelder: Schmitz Cargobull AG, 48341 Altenberge (DE)
(72) Erfinder: GERLING, Manfred, 48683 Ahaus (DE); BANKER, Werner, 48720 Rosendahl (DE); PAFFRATH, Sven, 48691 Vreden (DE)
(74) Vertreter: Cohausz & Florack

(57) **Zusammenfassung**

Beschrieben und dargestellt ist ein Paneel (6) zur Bildung eines Kofferaufbaus (1) eines Nutzfahrzeugs (N), insbesondere Lastkraftwagen, Anhänger oder Sattelauflieger, mit einer äußeren strukturgebenden Decklage (10), einer inneren strukturgebenden Decklage (1011) und einer zwischen der inneren Decklage (11) und der äußeren Decklage (10) vorgesehenen Kernlage (12) umfassend einen eine Vielzahl von Poren für Gas aufweisenden Kunststoff (13). Damit der Kofferaufbauten einfacher, schneller und kostengünstiger gefertigt werden kann, ist vorgesehen, dass in der Kernlage (12) eine sich wenigstens im Wesentlichen von der inneren Decklage (11) zur äußeren Decklage (10) erstreckende Kabeldurchführung (9) vorgesehen ist.

## Beschreibung

Die Erfindung betrifft ein Paneel zur Bildung eines Kofferaufbaus eines Nutzfahrzeugs, insbesondere Lastkraftwagen, Anhänger oder Sattelauflieger, mit einer äußeren strukturgebenden Decklage, einer inneren strukturgebenden Decklage und einer zwischen der inneren Decklage und der äußeren Decklage vorgesehenen Kernlage umfassend einen eine Vielzahl von Poren für Gas aufweisenden Kunststoff. Ferner betrifft die Erfindung einen Kofferaufbau eines Nutzfahrzeugs, insbesondere Lastkraftwagen, Anhänger oder Sattelauflieger, mit einer Stirnwand in Form eines solchen Paneels.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Nutzfahrzeugaufbauten auf, welche der Aufnahme der zu transportierenden Güter in einem Laderaum dienen. Unter Lastkraftwagen können vorliegend solche verstanden werden, die selbst angetrieben sind und eine Fahrerkabine ebenso aufweisen wie einen Nutzfahrzeugaufbau zur Aufnahme der Ladung. Es kommen aber auch Lastkraftwagen dieser oder einer anderen Art in Frage, die mit einem Anhänger betrieben werden, wobei Lastkraftwagen in einem solchen Gespann, das auch als Lastzug bekannt ist, als Motorwagen bezeichnet werden.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand meist Flügeltüren aufweist, um den Laderaum bedarfsweise von hinten zu beladen. Wenn eine Planeneinheit entlang der Seitenwand verschoben werden kann, spricht man auch von sogenannten Curtainsidern.

Neben den Planenaufbauten sind beispielsweise auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen oftmals an der Stirnwand, dem Dach und/oder den Seitenwänden zweischalige Paneele auf. Die Paneele umfassen dabei eine äußere und eine innere, strukturgebende Decklage sowie eine dazwischen vorgesehene Kernlage, die typischerweise aus einem, insbesondere geschäumten, Kunststoff gebildet wird. Dabei können die innere und/oder die äußere Decklage selbst bedarfsweise mehrlagig aufgebaut sein. Insbesondere geschäumte Kernlagen oder Kernlagen mit einem hohen Luftanteil können für ein hohes Maß an thermischer Isolation des Laderaums sorgen. Entsprechende Nutzfahrzeugaufbauten werden daher zweckmäßig für Kühltransporte eingesetzt. Um den Laderaum zu kühlen, weisen diese Nutzfahrzeuge typischerweise Transportkältemaschinen auf, die an der Stirnwand des Nutzfahrzeugaufbaus montiert sind, Luft aus dem Laderaum ansaugen, die angesaugte Luft kühlen und die gekühlte Luft anschließend wieder in den Laderaum zurückblasen.

Ferner sind Nutzfahrzeugaufbauten mit Paneelen bekannt, bei denen zwischen der inneren Decklage und der äußeren Decklage eine Kernlage aus einem Matrixelement in Form einer Wabenstruktur aus einem thermoplastischen Kunststoff vorgesehen ist. In den Waben der Wabenstruktur der Kernlage ist Luft eingeschlossen, wodurch eine hohe thermische Isolation bereitgestellt werden kann.

Bei der Fertigung bekannter Kofferaufbauten werden elektrische Kabel von außen nach innen in den Kofferaufbau verlegt, um beispielsweise elektrische Verbraucher wie Leuchten im Laderaum zu betreiben oder elektrische Ausstattungskomponenten des Kofferaufbaus anschließen zu können. Das Verlegen der erforderlichen Kabel in den Kofferaufbau hinein erfolgt typischerweise im Bereich der Schnittstellen, an denen die Seitenwände oder die Stirnwand mit dem Boden, die Seitenwände mit der Stirnwand und/oder das Dach mit den Seitenwänden und der Stirnwand verbunden werden. In vielen Fällen werden dabei Kabel zwischen der inneren strukturgebenden Decklage und der äußeren strukturgebenden Decklage verlegt und bedarfsweise in der Kernlage eingeschäumt. Die Durchführung der Kabel führt zu einem erheblichen Aufwand bei der Fertigung der Kofferaufbauten, was deren Herstellung erschwert und zu nennenswerten Mehrkosten führt.

Daher liegt der vorliegenden Erfindung die Aufgabe zugrunde, das Paneel und den Kofferaufbau jeweils der eingangs genannten und zuvor näher erläuterten Art derart auszugestalten und weiterzubilden, dass Kofferaufbauten einfacher, schneller und kostengünstiger gefertigt werden können.

Diese Aufgabe ist bei einem Paneel nach dem Oberbegriff des Anspruchs 1 dadurch gelöst, dass in der Kernlage eine sich wenigstens im Wesentlichen von der inneren Decklage zur äußeren Decklage erstreckende Kabeldurchführung vorgesehen ist.

Die genannte Aufgabe ist ferner bei einem Kofferaufbau nach dem Oberbegriff von Anspruch 12 dadurch gelöst, dass das Paneel nach einem der Ansprüche 1 bis 11 ausgebildet ist.

Anstatt das wenigstens eine Kabel über Schnittstellen des Kofferaufbaus von außen in den Innenraum bzw. Laderaum zu verlegen, wird das wenigstens eine Kabel durch eine Kabeldurchführung verlegt, die in ein bestimmtes Paneel integriert ist. Da die Schnittstellen des Kofferaufbaus für das Durchführen des Kabels nicht benötigt werden, kann der Kofferaufbau einfacher, schneller und kostengünstiger aus den einzelnen Paneelen zusammengesetzt werden. Dies bedarf zwar der Integration der Kabeldurchführung in das entsprechende Paneel, was mit einem zusätzlichen Aufwand verbunden ist, in Summe ist die Herstellung des Kofferaufbaus dennoch schneller, einfacher und kostengünstiger möglich. Um die Durchführung wenigstens eines Kabels nach dem eigentlichen Zusammenbau des Kofferaufbaus in einer einfachen und zuverlässigen Weise zu gestatten, erstreckt sich die Kabeldurchführung in der Kernlage des Paneels wenigstens in Wesentlichen von der inneren strukturgebenden Decklage bis zur äußeren strukturgebenden Decklage. So kann beispielsweise auch ein versehentliches Eindringen von Feuchtigkeit in die Kernlage vermieden werden, was die thermischen Isolationseigenschaften des Paneel erheblich herabsetzen kann. Nicht zuletzt kann auch der Kunststoff der Kernlage durch das nachträgliche Durchführen von Kabeln durch die Kabeldurchführung nicht beschädigt oder anderweitig beeinträchtigt werden.

Vorliegend stellen die innere strukturgebende Decklage und die äußere strukturgebende Decklage jeweils in Bezug auf das Paneel außenliegende Decklagen dar. Die innere strukturgebende Decklage ist jedoch an einer Seite des Paneels vorgesehen, die bei dem zu bildenden Kofferaufbau dem Laderaum zugeordnet ist, mithin nach innen weist. Die äußere strukturgebende Decklage ist dagegen an der Seite des Paneels vorgesehen, die bei dem zu bildenden Kofferaufbau der Umgebung zugeordnet ist, mithin nach außen weist.

Bei einer ersten besonders bevorzugten Ausgestaltung des Paneels ist der Kunststoff der Kernlage an die innere Decklage, die äußere Decklage und die Kabeldurchführung angeschäumt. Auf diese Weise kann die Kabeldurchführung sehr einfach in das Paneel integriert werden. Der Hohlraum zwischen der inneren Decklage und der äußeren Decklage kann nach dem Einbringen der Kabeldurchführung zwischen die innere Decklage und die äußere Decklage einfach mit einem Kunststoff ausgeschäumt werden. Eine nachträgliche Integration der Kabeldurchführung in die Kernlage kann dann entfallen. Außerdem kann beim Ausschäumen der Kernlage eine Verklebung zwischen dem Kunststoff der Kernlage einerseits und der inneren Decklage, der äußeren Decklage und/oder der Kabeldurchführung andererseits erfolgen, was das Paneel weiter aussteift.

Alternativ oder zusätzlich kann der freie Querschnitt der Kabeldurchführung nach dem Durchführen des wenigstens einen Kabels wenigstens ein Kunststoffelement aufweisen, das den verbleibenden freien Querschnitt verschließt. Dies ist zweckmäßig für die thermische Isolation des Paneels und verhindert die Ausbildung von Kältebrücken. Bei dem Kunststoffelement kann es sich zwecks thermischer Isolierung des Paneels vorzugsweise um ein solches aus einem geschäumten Kunststoff handeln. Zudem kann das Kunststoffelement einfach in den freien Querschnitt der Kabeldurchführung eingeschoben sein. Dies kann vereinfacht werden, wenn zwei oder mehrere separate Kunststoffelemente in den freien Querschnitt der Kabeldurchführung eingebracht werden.

Um ein Eindringen von Feuchtigkeit in den Kofferaufbau zu vermeiden und das Durchführen von Kabeln durch die Kabeldurchführung zu vereinfachen, kann die der inneren Decklage zugeordnete Öffnung der Kabeldurchführung höher angeordnet sein als die der äußeren Decklage zugeordnete Öffnung der Kabeldurchführung. In diesem Fall erstreckt sich die Kabeldurchführung vorzugsweise stetig von der inneren Decklage nach unten in Richtung der äußeren Decklage. Für das Durchführen von Kabeln kann es sich zudem anbieten, wenn die der inneren Decklage und der äußeren Decklage zugeordneten Öffnungen der Kabeldurchführung einander abschnittsweise überlappen, und zwar gesehen in einer Blickrichtung senkrecht zur inneren Decklage und/oder zur äußeren Decklage. Mit anderen Worten, die Projektionen der Öffnungen senkrecht zur inneren Decklage und/oder zur äußeren Decklage auf die innere Decklage oder die äußere Decklage überdecken einander abschnittsweise.

Zur besseren Montage und der besseren Dichtigkeit der Verbindung von Kabeldurchführung einerseits und innerer Decklage und/oder äußerer Decklage andererseits kann die Kabeldurchführung mit einem umlaufenden Flansch an der der Kernlage zugeordneten Seite der inneren Decklage und/oder an der der Kernlage zugeordneten Seite der äußeren Deckklage verklebt sein. Alternativ oder zusätzlich kann aus demselben Grund die Kabeldurchführung mit einem umlaufenden Flansch mit der inneren Decklage und/oder mit einem umlaufenden Flansch mit der äußeren Deckklage verschraubt sein.

Zum Verschließen und bedarfsweise Abdichten der Öffnung der Kabeldurchführung angrenzend zur inneren Decklage und/oder der äußeren Decklage kann an der der Kernlage abgewandten Seite der inneren Decklage und/oder an der der Kernlage abgewandten Seite der äußeren Decklage ein Deckelelement vorgesehen sein, das die zugehörige Öffnung der Kabeldurchführung wenigstens abschnittsweise verschließt. Die Montage des Deckelelements kann dabei vorzugsweise so erfolgen, dass das Deckelelement von der der Kernlage abgewandten Seite der inneren Decklage mit der inneren Decklage und/oder von der der Kernlage abgewandten Seite der äußeren Decklage mit der äußeren Decklage verschraubt ist. Dies vereinfacht das Fügen und erlaubt im Falle des Verschraubens des Deckelelements von der von der Kernlage abgewandten Seite der inneren Decklage mit der inneren Decklage die Ausbildung eines zollsicheren Kofferaufbaus. Das Deckelelement kann dann nämlich nicht von unbefugten Personen von außen in einer Weise entfernt oder beschädigt werden, die nachträglich nicht zu erkennen wäre.

Ein Deckelelement, insbesondere das Deckelelement an der äußeren Decklage, kann wenigstens eine wenigstens ein Kabel umfassende Kunststofftülle und Rahmenelemente aufweisen, welche die Kunststofftülle zusammen mit dem wenigstens einen Kabel halten. Dabei bietet es sich des einfachen Fügens halber an, wenn die Rahmenelemente über eine Rastverbindung miteinander verbunden werden und dabei einen Formschluss zwischen den Rahmenelementen und der wenigstens einen Tülle bereitstellen. Die Rastverbindung kann aber auch ohne den Formschluss vorgesehen sein und umgekehrt. Die Anzahl der Tüllen kann zudem ebenso wie die Anzahl durch eine gemeinsame Tülle hindurchgeführter Kabel je nach Anwendungsfall in geeigneter Weise gewählt werden. Es wird mithin ein hohes Maß an Flexibilität bereitgestellt.

Das wenigstens eine Kabel, das durch die Kabeldurchführung durchgeführt ist, kann wenigstens einen Stecker tragen. Das Durchführen des Kabels durch die Kabeldurchführung ist dann besonders einfach möglich, wenn der wenigstens eine Stecker durch die Kabeldurchführung durchführbar ist. In gleicher, nur entgegengesetzter Richtung konnte das Kabel dann durch die Kabeldurchführung geführt werden, als der Kofferaufbau gefertigt worden ist.

Alternativ oder zusätzlich bietet es sich besonders an, wenn das wenigstens eine durch die Kabelführung hindurchgeführte Kabel mit einer Steuereinrichtung verbunden ist. Die Steuereinrichtung kann dabei der Einfachheit halber an der von der Kernlage abgewandten Seite der äußeren Decklage vorgesehen sein.

Die Kabeldurchführung kann so vorgesehen sein, dass die der äußeren Decklage zugeordnete Öffnung der Kabeldurchführung einer Aussparung in einem die Steuereinrichtung aufnehmenden Gehäuse zugeordnet ist. Dann kann das Kabel aus der Kabeldurchführung direkt in das Gehäuse der Steuereinrichtung geführt und so entsprechend geschützt sein. Das Gehäuse der Steuereinrichtung ist dann mit seiner Rückseite wenigstens abschnittsweise im Bereich der Kabeldurchführung vorgesehen.

Bedarfsweise kann die Kabeldurchführung an geeigneter Stelle vorgesehen und zudem gegenüber mechanischer Beschädigung geschützt sein, wenn die der inneren Decklage zugeordnete Öffnung der Kabeldurchführung einer Aussparung in einer Sockelscheuerleiste auf der der Kernlage abgewandten Seite der inneren Decklage zugeordnet ist. Die Sockelscheuerleiste der inneren Decklage ist mithin im Bereich der Kabeldurchführung ausgespart, um das wenigstens eine Kabel im Bereich der Sockelscheuerleiste durch das Paneel durchzuführen.

Um die strukturgebenden Eigenschaften, insbesondere die Steifigkeit, der inneren Decklage und/oder der äußeren Decklage zu verbessern, kann die innere Decklage und/oder die äußere Decklage wenigstens eine Schicht aus Stahl, Aluminium und/oder einem faserverstärkten Kunststoff aufweisen. Diese Schichten können dünn sein, da auch der Kunststoff der Kernlage einen aussteifenden Effekt haben kann. Alternativ oder zusätzlich kann die innere Decklage und/oder die äußere Decklage mehrschichtig ausgebildet sein, um die gewünschten Materialeigenschaften durch Schichten unterschiedlicher Materialien bereitstellen zu können. Beispielsweise kann noch eine Lackschicht zum Schutz der entsprechenden Decklage und/oder es kann eine Haftvermittlerschicht vorgesehen sein, um eine Verklebung des geschäumten Kunststoffs mit der entsprechenden Decklage zu verbessern.

Besonders zweckmäßig kann es insbesondere im Zusammenhang mit Kühlkofferaufbauten umfassend eine an der Stirnwand vorgesehene Transportkältemaschine sein, wenn das Paneel ein Stirnwandpaneel ist. Alternativ oder zusätzlich kann das Durchführen von Kabeln durch die Kabeldurchführung vereinfacht werden, wenn die Kabeldurchführung an einem unteren Rand des Paneels vorgesehen ist.

Bei einer ersten besonders bevorzugten Ausgestaltung des Kofferaufbaus kann es sich anbieten, wenn an der Stirnwand eine Steuereinrichtung, Transportkältemaschine und/oder Telematikeinheit angebracht ist. Dies lässt sich dann einfach mit dem wenigstens einen durch die Kabeldurchführung durchgeführten Kabel verbinden, und zwar insbesondere über eine Steckverbindung.

Zum Schutze des wenigstens einen durch die Kabeldurchführung durchgeführten Kabels kann es sich anbieten, wenn dieses Kabel auf der der Kernlage abgewandten Seite der inneren Decklage wenigstens abschnittsweise zwischen der inneren Decklage und einer Zirkulationswand zur Zirkulation von Kühlluft zur Transportkältemaschine verläuft. Die Zirkulationswand kann dabei als Anschlag für Ladung gegenüber einem Verrutschen nach vorne dienen. Hinter der Zirkulationswand kann zwischen der Zirkulationswand und der inneren Decklage Luft nach oben zur Transportkältemaschine strömen, um von der Transportkältemaschine angesaugt, gekühlt und wieder in den Laderaum des Kofferaufbaus geblasen zu werden.

Wenn das wenigstens eine durch die Kabeldurchführung durchgeführte Kabel auf der der Kernlage abgewandten Seite der inneren Decklage mit wenigstens einer Schlaufe verlegt ist, ermöglicht dies einen Längenausgleich. So können beispielsweise Kofferaufbauten mit unterschiedlicher Höhe und damit unterschiedlicher erforderlicher Länge des wenigstens einen Kabels gleichartig ausgebildet werden und je nach der Höhe des Kofferaufbaus eine größere, eine kleinere oder gar keine Schlaufe im Kofferaufbau vorgesehen sein. Es können mithin unterschiedliche Kofferaufbauten mit gleichen Kabellängen ausgestattet werden. Zur Anpassung der jeweils benötigten Kabellänge kann dann bedarfsweise eine mehr oder weniger große Schlaufe im Kofferaufbau verlegt werden. Dabei bietet es sich zum Schutz des entsprechenden Kabels besonders an, wenn die Schlaufe in einem Längsausgleichgehäuse an der inneren Decklage aufgenommen ist. Alternativ oder zusätzlich kann die Schlaufe aus Platzgründen vorzugsweise wenigstens abschnittsweise S-förmig verlegt sein.

Nachfolgend wird die Erfindung anhand einer lediglich ein Ausführungsbeispiel darstellenden Zeichnung näher erläutert. In der Zeichnung zeigt
- Fig. 1: einen erfindungsgemäßen Kofferaufbau eines Nutzfahrzeugs in Form eines Sattelaufliegers mit einem erfindungsgemäßen Paneel an der Stirnwand des Kofferaufbaus,
- Fig. 2A-B: das Paneel der Stirnwand in schematischen Schnittansichten von der Seite und perspektivisch,
- Fig. 3A-B: das Paneel der Stirnwand in schematischen Schnittansichten gemäß Fig. 2A-B mit durchgeführten Kabeln,
- Fig. 4: ein Detail des Paneels im Bereich der Öffnung der äußeren Decklage in einer perspektivischen Ansicht,
- Fig. 5: ein Detail der Stirnwand in einer perspektivischen Ansicht von außen und
- Fig. 6: ein Detail der Stirnwand in einer perspektivischen Ansicht von innen.

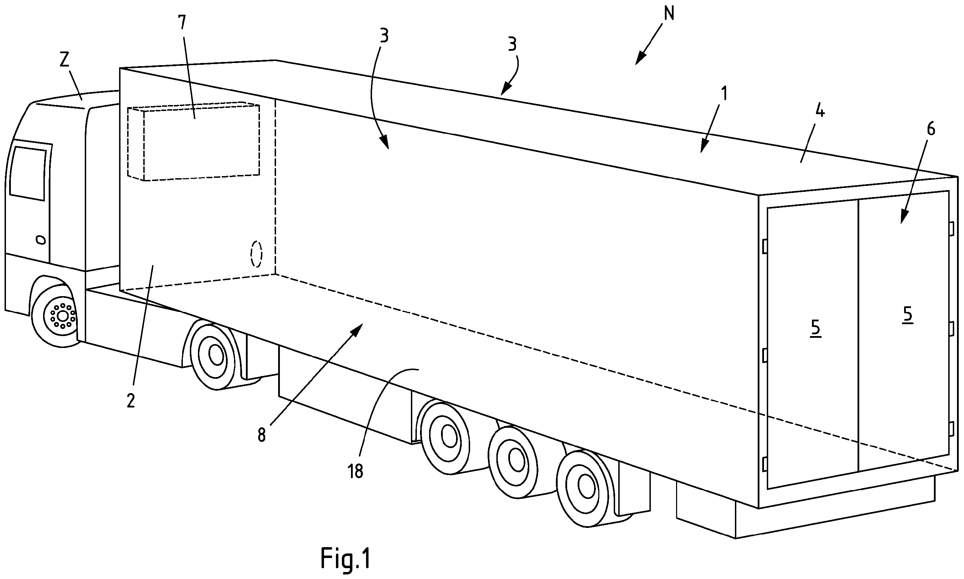

In der Fig. 1 ist ein von einer Zugmaschine Z gezogenes Nutzfahrzeug N in Form eines Sattelaufliegers dargestellt. Das Nutzfahrzeug N umfasst dabei einen Kofferaufbau 1 umfassend eine Stirnwand 2, Seitenwände 3, ein Dach 4 und eine Rückwandtüren 5 aufweisende Rückwand Die Stirnwand 2, die Seitenwände 3, das Dach 4 und die Rückwandtüren 5 werden durch Paneele 6 gebildet. An der Stirnwand 2 ist zudem eine Transportkältemaschine 7 vorgesehen, die Luft aus dem Laderaum 8 des Kofferaufbaus 1 ansaugt, kühlt und wieder zurück in den Laderaum 8 bläst. Zudem weist die Stirnwand 2 dem unteren Rand zugeordnet eine Kabeldurchführung 9 auf.

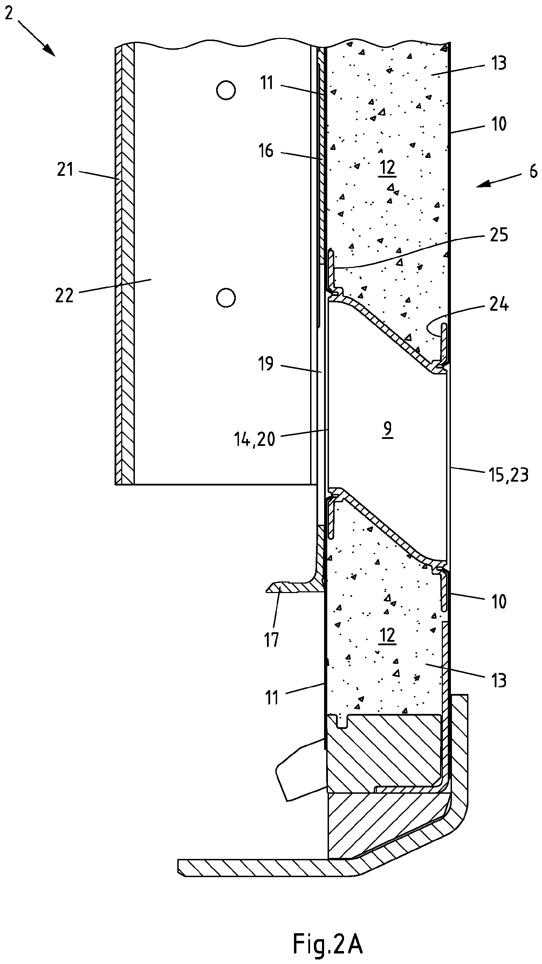

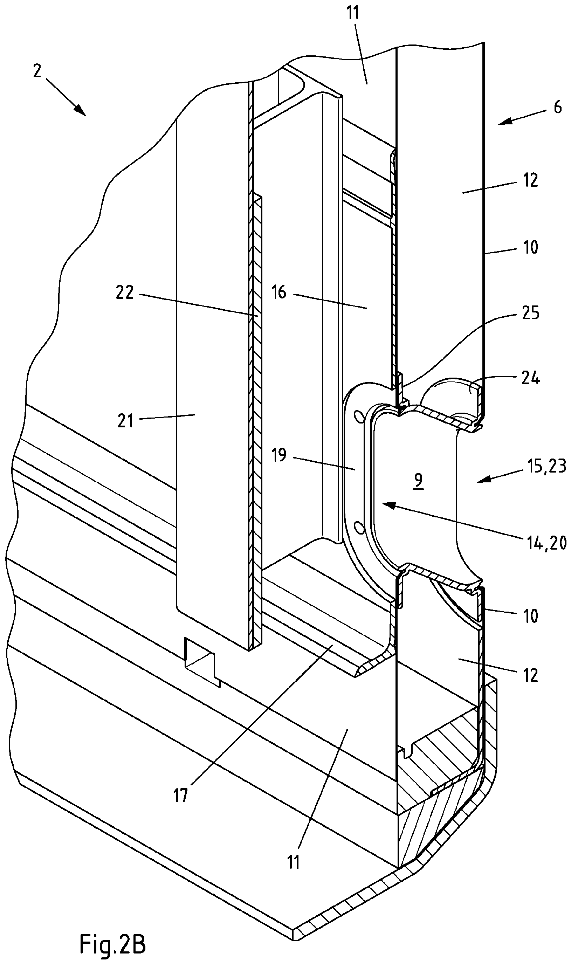

In den Fig. 2A-B sind schematische Schnittansichten der als Paneel 6 ausgebildeten Stirnwand 2 im Bereich der Kabeldurchführung 9 dargestellt. Bei der Fig. 2A ist eine Seitenansicht und in der Fig. 2B eine perspektivische Ansicht dargestellt. Zudem sind der besseren Übersichtlichkeit halber Bestandteile der Stirnwand 2 weggelassen worden. Die Stirnwand 2 weist eine äußere strukturgebende Decklage 10 in Form eines lackierten Stahlblechs auf. Zudem weist die Stirnwand 2 eine innere strukturgebende innere Decklage 11 auf, die ebenfalls durch ein lackiertes Stahlblech gebildet wird. Die Kabeldurchführung 9 ist aus einem Kunststoff gefertigt.

Zwischen der inneren Decklage 11 und der äußeren Decklage 10 befindet sich eine Kernlage 12 im Wesentlichen aus einem geschäumten Kunststoff 13, die der besseren Übersichtlichkeit halber lediglich in der Fig. 2A dargestellt ist. Zudem ist in der Kernlage 12 noch eine Kabeldurchführung 9 vorgesehen, die sich von der inneren Decklage 11 zur äußeren Decklage 10 erstreckt. Die Kabeldurchführung 9 der dargestellten und insoweit bevorzugten Stirnwand 2 ist mit einer Öffnung 14 in der inneren Decklage 11 und mit einer Öffnung 15 in der äußeren Decklage 10 verbunden worden, bevor der Kunststoff 13 zwischen die Decklagen 10,11 eingebracht worden ist. Der Kunststoff ist erst anschließend zwischen die Kernlagen 12 eingebracht und dort ausgeschäumt worden. Während des Ausschäumens ist der Kunststoff 13 mit der inneren Decklage 11, der äußeren Decklage 10 und der Kabeldurchführung 9 eine Klebeverbindung eingegangen.

Das untere Ende der Stirnwand 2 ist dazu ausgebildet, mit einem nicht dargestellten lediglich in der Fig. 1 dargestellten Boden verbunden zu werden. An der von der Kernlage 12 abgewandten Seite der inneren Decklage 11 ist eine Sockelscheuerleiste 16 vorgesehen, deren unterer Schenkel 17 dazu ausgebildet ist, von oben in Anlage an den lediglich in der Fig. 1 dargestellten Ladeboden 18 des Kofferaufbaus 1 zu gelangen. Die Sockelscheuerleiste 16 weist eine Aussparung 19 auf, die mit der Öffnung 14 der inneren Decklage 11 und der der inneren Decklage 11 zugeordneten Öffnung 20 der Kabeldurchführung 9 korrespondiert. Auf der Innenseite der Stirnwand 2 ist zudem eine Zirkulationswand 21 vorgesehen, die über vertikal verlaufende Profile 22 von der inneren Decklage 11 beabstandet ist und wenigstens im Wesentlichen parallel zur inneren Decklage 11 ausgerichtet ist. Zwischen der Zirkulationswand 21 und der inneren Decklage 11 kann Luft von unten aus dem Bereich des Ladebodens 18 nach oben in Richtung der Transportkältemaschine 7 strömen, um dort von der Transportkältemaschine 7 angesaugt, gekühlt und im Bereich des Dachs 4 wieder in den Laderaum 8 zurückgeblasen zu werden.

Die Kabeldurchführung 9 weist angrenzend an die innere Decklage 11 und angrenzend an die äußere Decklage 10 jeweils einen um die zugehörige Öffnung 20,23 der Kabeldurchführung 9 umlaufenden Flansch 24,25 auf, mit dem die Kabeldurchführung 9 jeweils von der Seite der Kernlage 12 mit der inneren Decklage 11 und der äußeren Decklage 10 verbunden, insbesondere verklebt, ist. Zudem ist die der äußeren Decklage 10 zugeordnete Öffnung 23 der Kabeldurchführung 9 tiefer angeordnet als die der inneren Decklage 11 zugeordnete Öffnung 20 der Kabeldurchführung 9. In einer Blickrichtung senkrecht auf die Decklagen 10,11 gesehen überlappen die Öffnungen 20,23 jedoch teilweise.

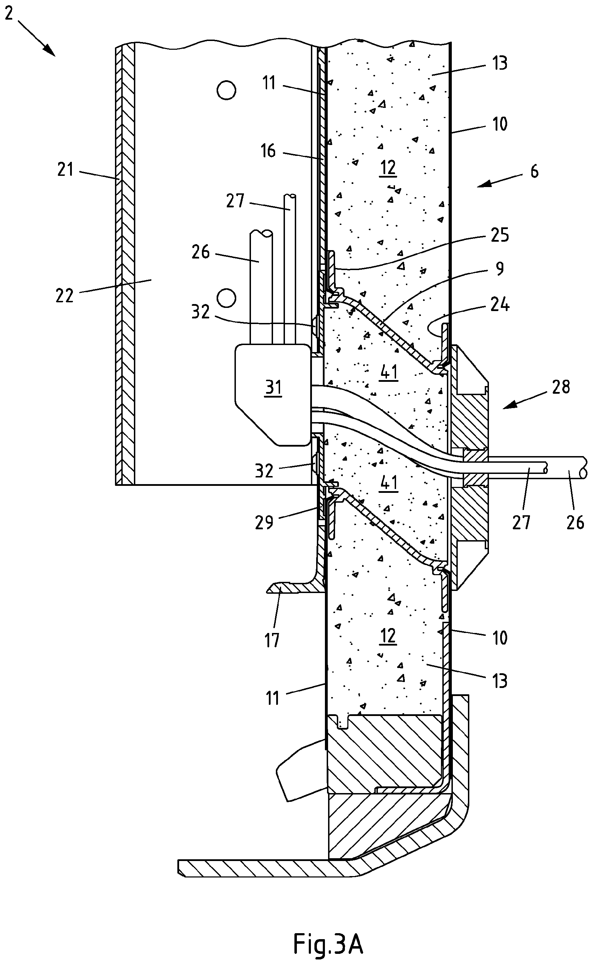

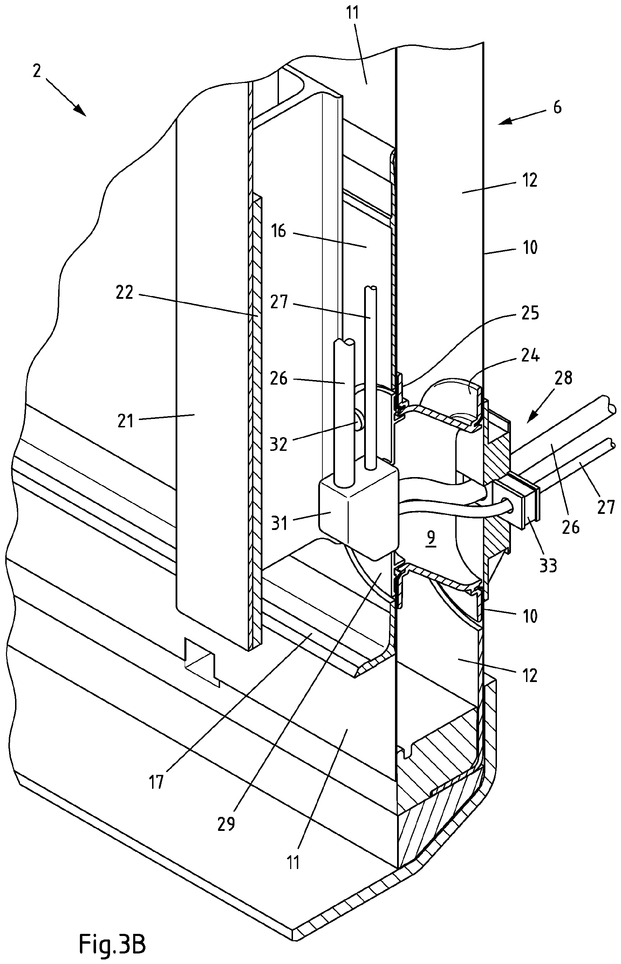

In der Fig. 3A-B ist in analogen Schnittansichten zu den Fig. 2A-B dargestellt, wie Kabel 26,27 durch die Kabelführung durchgeführt sind. Die Kabelführung und die zugehörigen Öffnungen sind groß genug, so dass Kabel mitsamt nicht dargestellten Steckern durch die Kabelführung durchgeführt werden können. Lediglich in der Fig. 3A ist dargestellt, dass nach dem oder mit dem Durchführen der Kabel durch die Kabeldurchführung 9 Kunststoffelemente 41 in die Kabeldurchführung 9 eingebracht werden, um den verbleibenden freien Querschnitt der Kabeldurchführung 9 wenigstens im Wesentlichen auszufüllen. Dies dient der zusätzlichen Isolierung der Stirnwand 2. Bei der dargestellten und insoweit bevorzugten Stirnwand 2 sind ein oberes und ein unters Kunststoffelement 41 in der Kabeldurchführung 9 vorgesehen. Beide Kunststoffelemente 41 sind aus einem geschäumten Kunststoff gebildet.

Nach dem Durchführen der Kabel 26,27 durch die Kabeldurchführung 9 sind die Öffnungen 20,23 der Kabeldurchführung 9 mit Deckelelementen 28,29 verschlossen worden, von denen ein Deckelelement 28 der äußeren Decklage 10 und ein anderes Deckelement 29 der inneren Decklage 11 zugeordnet ist. Das der inneren Decklage 11 zugeordnete Deckelelement 29 weist eine Aussparung 30 für die Kabel 26,27 auf. Auf der Aussparung 30 sitzt ein Winkelstück 31, in dem die Kabel 26,27 um etwa 90° nach oben umgelenkt werden. Anschließend verlaufen die Kabel 26,27 parallel zur inneren Decklage 11 an dieser nach oben. Das Deckelelement 29 ist über Schrauben 32 mit der inneren Decklage 11 und dem zugehörigen Flansch 25 der Kabeldurchführung 9 verschraubt.

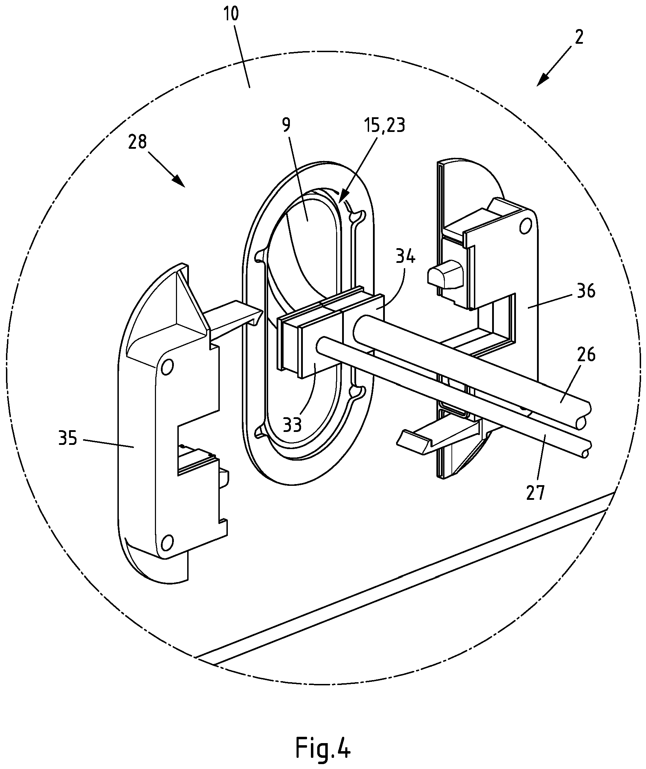

Wie dies in der Fig. 4 dargestellt ist, ist das der äußeren Decklage 10 zugeordnete Deckelement 28 so ausgebildet, dass die Kabeldurchführung 9 in hohem Maße spritzwassergeschützt ist. Um die Kabel 26,27 ist jeweils eine Tülle 33,34 herumgelegt, wobei anstelle von zwei Tüllen 33,34 auch eine einzige Tülle verwendet werden könnte. Die Tüllen 33,34 sind aus einem Kunststoff gebildet und im Wesentlichen elastisch. Die Tüllen 33,34 sind ferner formschlüssig in Rahmenelemente 35,36 eingeschoben, die über Rastverbindungen formschlüssig untereinander verbunden sind. Das fertig gefügte, der äußeren Decklage 10 zugeordnete Deckelelement 28 wird abschließend mit der äußeren Decklage 10 und dem zugehörigen Flansch 24 der Kabeldurchführung 9 verschraubt.

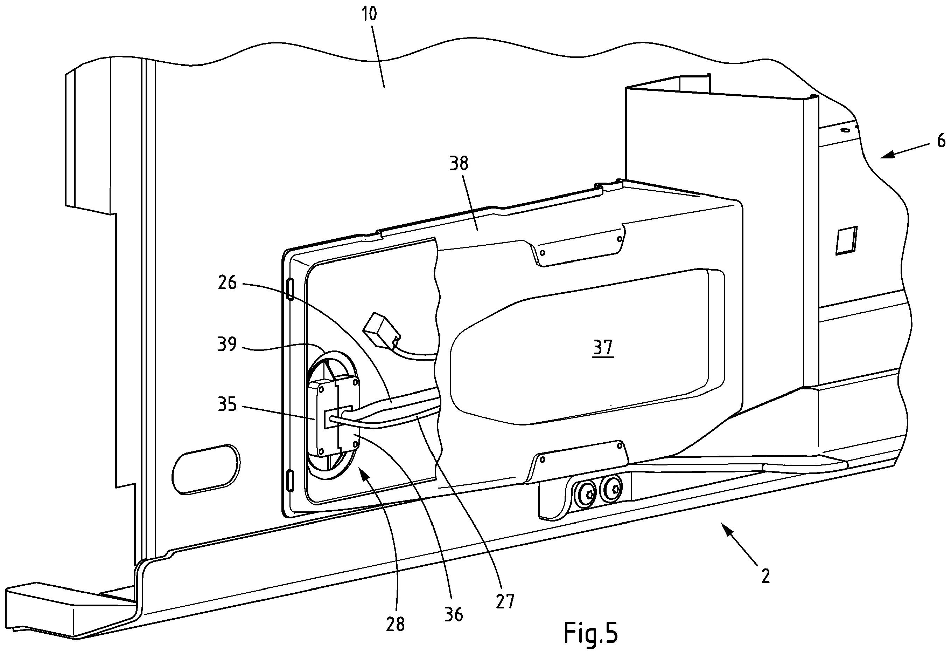

In der Fig. 5 ist an der von der Kernlage 12 abgewandten Seite der äußeren Decklage 10 des Paneels 6 der Stirnwand 2 eine Steuereinrichtung 37 dargestellt, die beispielsweise zur Steuerung von Innenlicht und/oder zur Steuerung und/oder Überwachung einer die Stromversorgung des Kofferaufbaus 1 sicherstellenden Batterie ausgebildet ist. Die Steuereinrichtung 37 kann alle, insbesondere elektrischen, Einrichtungen des Kofferaufbaus 1 steuern, wobei sicherheitsrelevante Einrichtungen, wie etwa die Bremse, ausgenommen sein können. Die Steuereinrichtung 37 weist ein Gehäuse 38 auf, wobei in der Rückseite des Gehäuses 38 eine Aussparung oder Öffnung 39 vorgesehen ist, die mit der Öffnung 23 der Kabeldurchführung 9 und der Öffnung 15 der äußeren Decklage 10 korrespondiert. In der Aussparung oder Öffnung 39 des Gehäuses 38 ist bei dem dargestellten und insoweit bevorzugten Paneel 6 das Deckelelement 28 der äußeren Decklage 10 aufgenommen. Unabhängig davon sind die Kabel 26,27 aus der Kabeldurchführung 9 direkt in das Gehäuse 38 der Steuereinrichtung 37 geführt und von außen mithin nicht ohne Weiteres zugänglich. Das Gehäuse 38 der Steuereinrichtung 37 ist bei der dargestellten und insoweit bevorzugten Stirnwand 2 mit der äußeren Decklage 10 verschraubt.

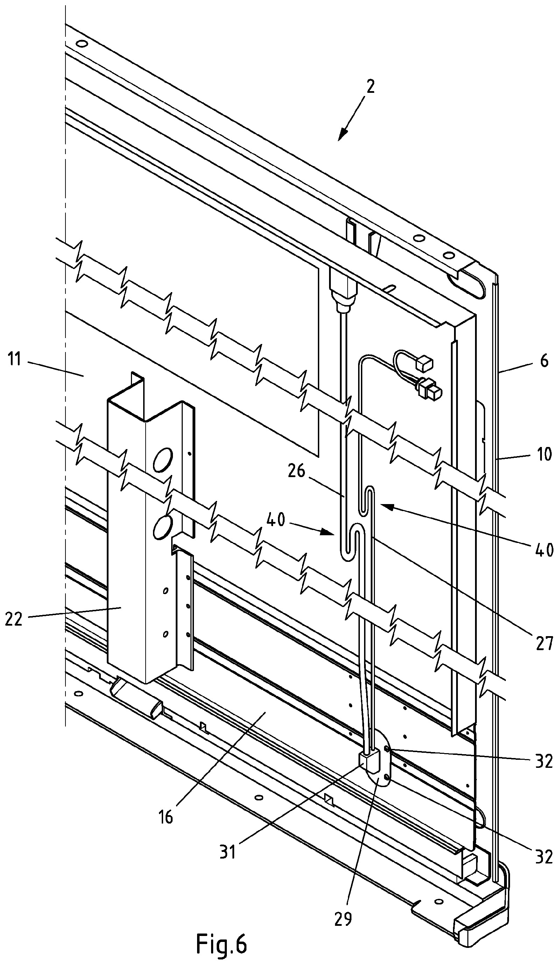

In der Fig. 6 ist die Stirnwand 2 mit dem entsprechenden Paneel 6 in einer Ansicht vom Laderaum 8 aus dargestellt, wobei der besseren Übersichtlichkeit halber die Zirkulationswand 21 weggelassen worden ist. Zudem ist bei der dargestellten und insoweit bevorzugten Stirnwand 2 ein Hutprofil weggelassen worden, das mit seiner offenen Seite mit der Innenseite der inneren Decklage 11 verbunden ist und in dem die Kabel 26,27 wenigstens abschnittsweise entlang der inneren Decklage 11 geführt sind. Die Kabel 26,27 sind so verlegt, dass die Kabel 26,27 jeweils eine S-förmige Schlaufe 40 bilden. Somit können gleiche Kabel 26,27 für unterschiedlich hohe Stirnwände 2 verbaut werden. Je nachdem wie hoch die Stirnwand 2 ist, fallen dann beim Verlegen der Kabel 26,27 die Schlaufen 40 unterschiedlich groß aus. Die Schlaufen 40 können bedarfsweise auch vollständig wegfallen. Bei der dargestellten und insoweit bevorzugten Stirnwand 2 sind die Schlaufen 40 jeweils in separaten, nicht dargestellten Gehäusen vorgesehen, in denen die S-förmigen Schlaufen 40 der Kabel 26,27 form- und/oder kraftschlüssig gehalten werden. Diese Gehäuse sind aber bedarfsweise auch entbehrlich.

### Bezugszeichenliste

| | | | |
|---|---|---|---|
| 1 | Kofferaufbau | 23 | äußere Öffnung |
| 2 | Stirnwand | 24 | äußerer Flansch |
| 3 | Seitenwand | 25 | innerer Flansch |
| 4 | Dach | 26 | Kabel |
| 5 | Rückwandtüren | 27 | Kabel |
| 6 | Rückwand | 28 | äußeres Deckelelement |
| 7 | Transportkältemaschine | 29 | inneres Deckelelement |
| 8 | Laderaum | 30 | Aussparung |
| 9 | Kabeldurchführung | 31 | Winkelstück |
| 10 | äußere Decklage | 32 | Schrauben |
| 11 | innere Decklage | 33 | Tülle |
| 12 | Kernlage | 34 | Tülle |
| 13 | Kunststoff | 35 | Rahmenelement |
| 14 | Öffnung in innerer Decklage | 36 | Rahmenelement |
| 15 | Öffnung in äußerer Decklage | 37 | Steuereinrichtung |
| 16 | Sockelscheuerleiste | 38 | Gehäuse |
| 17 | Schenkel | 39 | Öffnung |
| 18 | Ladeboden | 40 | Schlaufe |
| 19 | Aussparung | 41 | Kunststoffelement |
| 20 | innere Öffnung | N | Nutzfahrzeug |
| 21 | Zirkulationswand | Z | Zugmaschine |
| 22 | Profil | | |

## Patentansprüche

1. Paneel (6) zur Bildung eines Kofferaufbaus (1) eines Nutzfahrzeugs (N), insbesondere Lastkraftwagen, Anhänger oder Sattelauflieger, mit einer äußeren strukturgebenden Decklage (10), einer inneren strukturgebenden Decklage (11) und einer zwischen der inneren Decklage (11) und der äußeren Decklage (10) vorgesehenen Kernlage (12) umfassend einen eine Vielzahl von Poren für Gas aufweisenden Kunststoff (13),
**dadurch gekennzeichnet, dass** in der Kernlage (12) eine sich wenigstens im Wesentlichen von der inneren Decklage (11) zur äußeren Decklage (10) erstreckende Kabeldurchführung (9) vorgesehen ist.

2. Paneel nach Anspruch 1,
**dadurch gekennzeichnet, dass** der Kunststoff (13) der Kernlage (12) an die innere Decklage (11), die äußere Decklage (10) und die Kabeldurchführung (9) angeschäumt ist und/oder dass wenigstens ein den freien Querschnitt der Kabeldurchführung (9) ausfüllendes, insbesondere geschäumtes, Kunststoffelement (41) in die Kabeldurchführung (9) eingeschoben ist.

3. Paneel nach Anspruch 1 oder 2,
**dadurch gekennzeichnet, dass** die der inneren Decklage (11) zugeordnete Öffnung (20) der Kabeldurchführung (9) höher angeordnet ist als die der äußeren Decklage (10) zugeordnete Öffnung (23) der Kabeldurchführung (9) und dass, vorzugsweise, die der inneren Decklage (11) und der äußeren Decklage (10) zugeordneten Öffnungen (20,23) der Kabeldurchführung (9) in einer Richtung senkrecht auf die innere Decklage (11) und/oder die äußere Decklage (10) gesehen einander überlappen.

4. Paneel nach einem der Ansprüche 1 bis 3,
**dadurch gekennzeichnet, dass** die Kabeldurchführung (9) mit einem umlaufenden Flansch (24,25) an der der Kernlage (12) zugeordneten Seite der inneren Decklage (11) und/oder der äußeren Deckklage (10) verklebt ist und/oder dass die Kabeldurchführung (9) mit einem umlaufenden Flansch (24,25) mit der inneren Decklage (11) und/oder der äußeren Deckklage (10) verschraubt ist.

5. Paneel nach einem der Ansprüche 1 bis 4,
**dadurch gekennzeichnet, dass** an der der Kernlage (12) abgewandten Seite der inneren Decklage (11) und/oder an der der Kernlage (12) abgewandten Seite der äußeren Decklage (10) ein Deckelelement (28,29) zum abschnittsweisen Verschließen der zugehörigen Öffnung (20,23) der Kabeldurchführung (9) vorgesehen ist und dass, vorzugsweise, das Deckelelement (29) von der der Kernlage (12) abgewandten Seite der inneren Decklage (11) mit der inneren Decklage (11) und/oder von der der Kernlage (12) abgewandten Seite der äußeren Decklage (10) mit der äußeren Decklage (10) verschraubt ist.

6. Paneel nach Anspruch 5,
**dadurch gekennzeichnet, dass** das Deckelelement (28) wenigstens eine wenigstens ein Kabel (26,27) umfassende Tülle aus Kunststoff (33,34) und die Tülle (33,34) haltende Rahmenelemente (35,36) aufweist und dass, vorzugsweise, die Rahmenelemente (35,36) formschlüssig mit der Tülle (33,34) und/oder die Rahmenelemente (35,36) über eine Rastverbindung miteinander verbunden sind.

7. Paneel nach einem der Ansprüche 1 bis 6,
**dadurch gekennzeichnet, dass** wenigstens ein wenigstens einen Stecker aufweisendes Kabel (26,27) durch die Kabeldurchführung (9) hindurchgezogen ist und dass, vorzugsweise, der wenigstens eine Stecker durch die Kabeldurchführung (9) durchführbar ist.

8. Paneel nach einem der Ansprüche 1 bis 7,
**dadurch gekennzeichnet, dass** das wenigstens eine durch die Kabelführung (9) hindurchgeführte Kabel (26,27) mit einer Steuereinrichtung (37) verbunden ist und dass, vorzugsweise, die Steuereinrichtung (37) an der von der Kernlage (12) abgewandten Seite der äußeren Decklage (10) vorgesehen ist.

9. Paneel nach einem der Ansprüche 1 bis 8,
**dadurch gekennzeichnet, dass** die der äußeren Decklage (10) zugeordnete Öffnung (23) der Kabeldurchführung (9) einer Aussparung oder Öffnung (39) in einem die Steuereinrichtung (37) aufnehmenden Gehäuse (38) zugeordnet ist und/oder dass die der inneren Decklage (11) zugeordnete Öffnung (20) der Kabeldurchführung (9) einer Aussparung (19) in einer Sockelscheuerleiste (16) auf der der Kernlage (12) abgewandten Seite der inneren Decklage (11) zugeordnet ist.

10. Paneel nach einem der Ansprüche 1 bis 9,
**dadurch gekennzeichnet, dass** die innere Decklage (11) und/oder die äußere Decklage (10) wenigstens eine Schicht aus Stahl, Aluminium und/oder einem faserverstärkten Kunststoff aufweist und/oder dass die innere Decklage (11) und/oder die äußere Decklage (10) mehrschichtig ausgebildet ist.

11. Paneel nach einem der Ansprüche 1 bis 10,
**dadurch gekennzeichnet, dass** das Paneel (6) einer Stirnwandpaneel (2) ist und/oder dass die Kabeldurchführung (9) einem unteren Rand des Paneels (6) zugeordnet ist.

12. Kofferaufbau (1) eines Nutzfahrzeugs (N), insbesondere Lastkraftwagen, Anhänger oder Sattelauflieger, mit einer Stirnwand (2) in Form eines Paneels (6), **dadurch gekennzeichnet, dass** das Paneel (6) nach einem der Ansprüche 1 bis 11 ausgebildet ist.

13. Kofferaufbau nach Anspruch 12,
**dadurch gekennzeichnet, dass** an der Stirnwand (2) eine Steuereinrichtung (37), Transportkältemaschine (7) und/oder Telematikeinheit angebracht ist und dass wenigstens ein durch die Kabeldurchführung durchgeführtes Kabel mit der Steuereinrichtung (37), Transportkältemaschine (7) und/oder Telematikeinheit verbunden ist.

14. Kofferaufbau nach Anspruch 12 oder 13,
**dadurch gekennzeichnet, dass** das wenigstens eine durch die Kabeldurchführung (9) durchgeführte Kabel (26,27) auf der der Kernlage (12) abgewandten Seite der inneren Decklage (11) wenigstens abschnittsweise zwischen der inneren Decklage (11) und einer Zirkulationswand (21) zur Zirkulation von Kühlluft zur Transportkältemaschine (7) verläuft.

15. Kofferaufbau nach einem der Ansprüche 12 bis 14,
**dadurch gekennzeichnet, dass** das wenigstens eine durch die Kabeldurchführung (9) durchgeführte Kabel (26,27) auf der der Kernlage (12) abgewandten Seite der inneren Decklage (11) mit wenigstens einer einen Längenausgleich ermöglichenden zulassenden Schlaufe (38) verlegt ist.
